**Europäisches Patentamt**

(19) **European Patent Office**

**Office européen des brevets**

(11) Numéro de publication: **0 039 635**
**B1**

(12) **FASCICULE DE BREVET EUROPEEN**

(45) Date de publication du fascicule du brevet:
**14.11.84**

(21) Numéro de dépôt: **81400664.9**

(22) Date de dépôt: **28.04.81**

(51) Int. Cl.³: **G 06 F 3/04**

(54) Procédé d'arbitration centralisée, et arbitreur centralisé.

(30) Priorité: **06.05.80 FR 8010086**

(43) Date de publication de la demande:
**11.11.81 Bulletin 81/45**

(45) Mention de la délivrance du brevet:
**14.11.84 Bulletin 84/46**

(84) Etats contractants désignés:
**DE GB IT**

(56) Documents cités:
**US - A - 3 353 160**
**US - A - 3 633 163**

**IEEE TRANSACTIONS ON COMPUTERS, vol. C-24, no. 9,**
**Septembre 1975, New York, US, PEARCE et al.:**
**"Asynchronous Arbiter Module", pages 931-932**
**"Large Scale Integration: technology, applications and**
**impacts" fourth EUROMICRO Symposium on**
**Microprocessing and Microprogramming. October 17-19,**
**1978 Munich", Amsterdam, NL, BRANDWAJN et al.:**
**"Communication in the fast universe of arcade, a**
**loosely-coupled adaptice multiprocessor system",**
**pages 281-290**
**"Computer Design", avril 1978, Concord, US,**
**HOJBERG: "One-step programmable arbiters for**
**multiprocessors". pages 154-156, 158**

(73) Titulaire: **THOMSON-CSF TELEPHONE, 146, Boulevard**
**de Valmy, F-92707 Colombes (FR)**

(72) Inventeur: **Nicolas, Alain Pierre Henri, THOMSON-CSF**
**SCPI 173, bld Haussmann, F-75360 Paris Cedex 08 (FR)**
Inventeur: **Chapelain, Jean Pierre Alexandre,**
**THOMSON-CSF SCPI 173, bld Haussmann,**
**F-75360 Paris Cedex 08 (FR)**

(74) Mandataire: **Chaverneff, Vladimir et al, THOMSON-CSF**
**SCPI 173, Bld Haussmann, F-75379 Paris Cedex 08 (FR)**

ACTORUM AG

## Description

La présente invention se rapporte à un procédé d'arbitration centralisée, ainsi qu'à un arbitreur centralisé pour un système multiprocesseur.

On connaît d'après l'article des pages 154 à 158 du numéro d'avril 1978 de la revue «Computer Design» un dispositif d'arbitration pour un système multiprocesseur comportant plusieurs unités de traitement identiques, toutes reliées au même bus. Cet arbitreur connu, du type synchrone, permet d'établir une priorité tournante entre les différentes unités de traitement afin qu'aucune d'entre elles ne monopolise le bus, et afin que le traitement réalisé par le système multiprocesseur soit le plus rapide possible. L'arbitreur connu comporte essentiellement une mémoire morte dans laquelle sont programmées toutes les configurations possibles de demandes de réservation du bus et d'états correspondants.

La taille de cette mémoire est fonction du nombre d'unités de traitement coopérant avec elle. Si le nombre d'unités de traitement est peu élevé, la capacité de la mémoire morte nécessaire pour réaliser l'arbitreur est corrélativement faible, et l'arbitreur est donc peu onéreux et facile à réaliser. Par contre, si le nombre d'unités de traitement est élevé, il faut utiliser plusieurs mémoires, et la réalisation de l'arbitreur devient complexe et onéreuse.

- On connaît d'autre part d'après le document US-A-3 633 163 un procédé de détermination de priorité de plusieurs sous-ensembles faisant partie d'un système comprenant une voie de communication commune, ainsi qu'un dispositif d'arbitration centralisée pour la mise en œuvre de ce procédé. Il est question dans ce document de trois niveaux de décision fonctionnant consécutivement. Il faut neuf coups d'horloge, dans le cas le plus défavorable pour déterminer la priorité pour un ensemble de 64 unités.

La présente invention a pour objet un procédé d'arbitration de plusieurs sous-ensembles permettant une détermination simple et rapide des priorités, ainsi qu'un dispositif arbitreur pour la mise en œuvre de ce procédé, ce dispositif devant être le moins encombrant et onéreux possible, et le plus simple possible à réaliser.

Le procédé d'arbitration conforme à la présente invention est un procédé d'arbitration de plusieurs sous-ensembles faisant partie d'un système comprenant une voie de communication commune et un dispositif d'arbitration centralisée, chaque sous-ensemble pouvant réclamer la priorité pour l'accès à cette voie afin d'effectuer une opération élémentaire, les lignes de demandes de priorité de ces sous-ensembles étant réparties en plusieurs groupes, et leurs lignes d'attribution de priorité étant réparties de façon correspondante, et selon la présente invention on réserve à chacun de ces groupes une seule ou plusieurs priorités dans une suite cyclique principale d'attribution de priorité, on réserve à chacun des sous-ensembles, à l'intérieure de chaque groupe, une seule ou plusieurs priorités dans une suite cyclique secondaire, le dispositif d'arbitration centralisée recevant de chaque sous-ensemble un signal de demande d'utilisation de la voie commune, et ce dispositif d'arbitration détermine à quel groupe, parmi ceux dans lesquels s'est produite une demande, revient la priorité selon la suite principale, et détermine à quel sous-ensemble relatif à ce groupe revient la priorité selon la suite secondaire, et envoie un signal d'attribution à ce sous-ensemble.

Selon un aspect préféré du procédé de la présente invention, on attribue, pour la suite cyclique principale, une seule priorité à chacun des groupes et ce selon un ordre déterminé, fixé à l'avance, et on attribue, pour les suites cycliques secondaires, dans chaque groupe, une seule priorité à chacun des sous-ensembles, et ce selon un autre ordre déterminé fixé à l'avance.

Selon un autre aspect du procédé de l'invention, on répartit, dans chaque groupe ou dans certains d'entre eux, les sous-ensembles en plusieurs sous-groupes, on réserve à chacun des groupes une seule ou plusieurs priorités dans une suite cyclique principale, on réserve une seule ou plusieurs priorités à chacun des sous-groupes dans des suites cycliques secondaires, et on réserve une seule ou plusieurs priorités à chacun des sous-ensembles à l'intérieur de chaque sous-groupe dans des suites cycliques tertiaires.

Selon un autre aspect du procédé de l'invention, on modifie en cours de traitement l'ordre des priorités de la suite cyclique principale et/ou des suites cycliques secondaires et/ou des suites cycliques tertiaires.

Le dispositif arbitreur conforme à l'invention est un dispositif d'arbitration centralisée distribuant la priorité à un système comprenant plusieurs sous-ensembles pouvant réclamer la priorité pour l'accès à une voie de communication commune, chacun de ces sous-ensembles comportant une sortie de demande d'accès et une entrée d'autorisation d'accès, ce dispositif comportant plusieurs arbitreurs élémentaires individuels, chacun d'eux étant relié à un groupe de sorties de demande d'accès et d'entrées d'autorisation d'accès, un dispositif de validation étant interposé, pour chacun des groupes, entre les sorties d'un arbitreur élémentaire et les entrées correspondantes d'autorisation d'accès des sous-ensembles, et un arbitreur élémentaire de groupe dont chaque sortie est reliée à un dispositif de validation des sorties d'un arbitreur élémentaire individuel correspondant, et selon l'invention l'arbitreur élémentaire de groupe comprend un registre et une mémoire d'attribution de priorité aux groupes, et ce dispositif comprend plusieurs circuits OU à plusieurs entrées chacun, ces entrées étant reliées respectivement, pour chacun des circuits OU aux sorties de demande d'accès des sous-ensembles d'un des groupes, la sortie de chaque circuit OU étant reliée, par l'intermédiaire du registre à des premières entrées de la mémoire d'attribution de priorité aux groupes dont une autre entrée est reliée, par l'intermédiaire du même registre, à toutes les sorties «voie de communication commune occupée», reliées ensemble, des sous-ensembles, et dont m autres entrées sont reliées, par l'intermédiaire du même registre à m autres sorties de cette mémoire, m étant égal à la partie entière, augmentée d'une unité, du logarithme à base 2 du nombre de groupes, et une autre sortie de ladite mémoire étant reliée simultanément à toutes les entrées «voie de communication commune libre» des sous-ensembles.

De préférence, la mémoire d'attribution de priorités aux niveaux est une mémoire morte.

Selon une variante de l'invention, l'une ou plusieurs des mémoires du dispositif arbitreur sont des mémoires vives reliées, à un dispositif permettant d'en modifier le contenu.

Selon encore une autre variante de l'invention, le dispositif arbitreur comprend dans chaque groupe et/ou pour l'ensemble des groupes plusieurs mémoires mortes différentes reliées à un dispositif sélecteur permettant de sélectionner l'une d'entre elles.

La présente invention sera mieux comprise à l'aide de la description détaillée d'un mode de réalisation pris comme exemple non limitatif et illustré par le dessin annexé, sur lequel:

– la fig. 1 est un bloc-diagramme simplifié d'un système multiprocesseur conforme à la présente invention, et
– la fig. 2 est une schéma détaillé de l'arbitreur du système de la fig. 1.

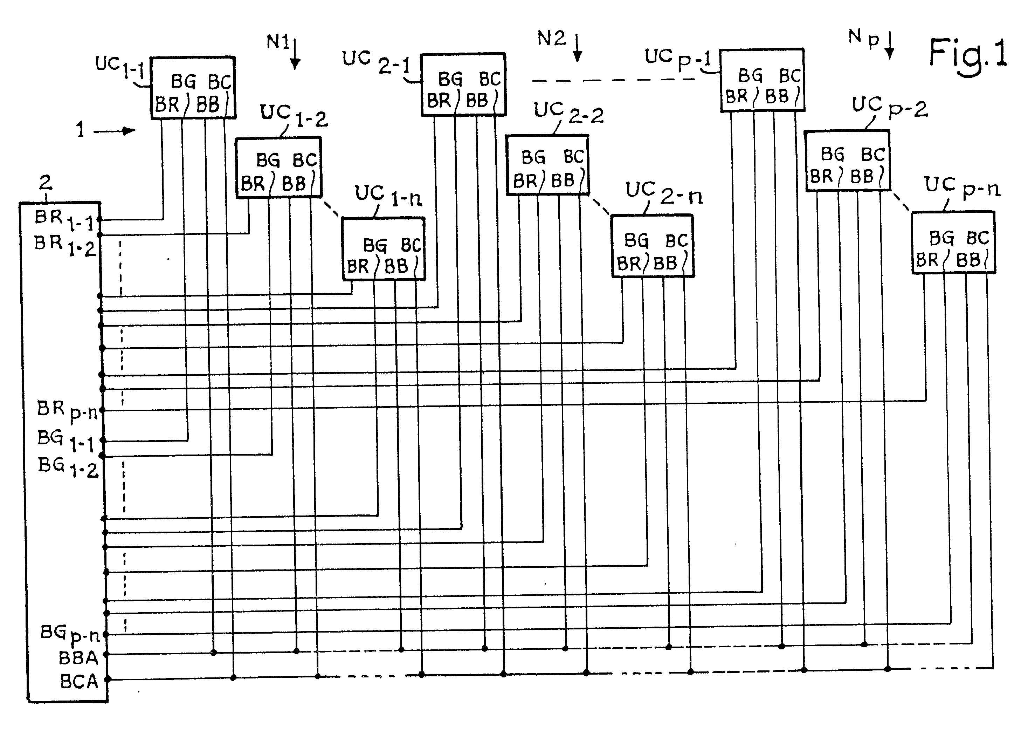

Le système multiprocesseur partiellement représenté sur la fig. 1 comporte un ensemble 1 de p.n unités de traitement identiques réparties en p groupes, ou niveaux, comportant chacun n unités de traitement. De préférence, si le nombre (p.n) est un carré parfait, on choisit p = n, et dans le cas contraire, on choisit p le plus voisin possible de n, p pouvant être supérieur ou inférieur à n. Dans le cas représenté sur la fig. 1, les unités de traitement sont référencées $UC_{1.1}$ à $UC_{1.n}$ pour le premier niveau, $UC_{2.1}$ à $UC_{2.n}$ pour le deuxième niveau, et ainsi de suite jusqu'au niveau de rang p pour lequel les unités de traitement sont référencées $UC_{p.1}$ à $UC_{p.n}$, les niveaux de rang 1 à p étant respectivement référencés N1 à Np.

Chacune des unités de traitement de l'ensemble 1 comporte, en particulier, deux sorties et deux entrées destinées à être reliées à un dispositif arbitreur centralisé 2 commun à toutes les unités de traitement. Les deux sorties sont référencées BR (Bus Request, c'est-à-dire demande d'utilisation du bus) et BB (Bus Busy, c'est-à-dire occupé) et les deux entrées sont référencées BG (Bus Grant, c'est-à-dire bus accordé) et BC (Bus Clear, c'est-à-dire dégagement du bus).

Les sorties BR des unités de traitement $UC_{1.1}$ à $UC_{p.n}$ sont reliées chacune à une entrée correspondante de l'arbitreur 2, ces entrées étant respectivement référencées $BR_{1.1}$ à $BR_{p.n}$. Les entrées BG des unités de traitement $UC_{1.1}$ à $U.C_{p.n}$ sont reliées chacune à une sortie correspondante de l'arbitreur 2, ces sorties étant respectivement référencées $BG_{1.1}$ à $BG_{p.n}$.

Les sorties BB de toutes les unités de traitement sont reliées ensemble et à une entrée commune BBA de l'arbitreur 2. Les entrées BC de toutes les unités de traitement sont reliées ensemble et à une sortie commune BCA de l'arbitreur 2.

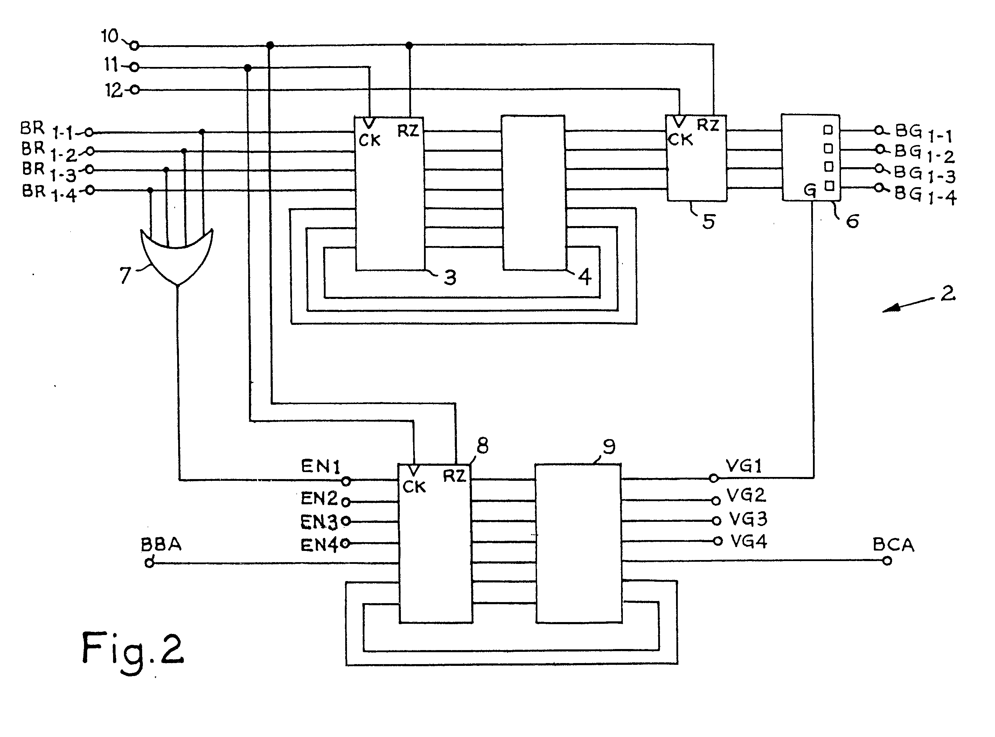

On a partiellement représenté sur la fig. 2 le schéma d'un mode de réalisation de l'arbitreur 2 dans le cas où le nombre (p.n) d'unités de traitement est de 16, cas où l'on choisit p = n = 4. Pour la clarté du dessin, seules les entrées $BR_{1.1}$ à $BR_{1.4}$ et les sorties $BG_{1.1}$ à $BG_{1.4}$ relatives au niveau 1 ont été représentées, les circuits tels que les circuits 3 à 6 reliant ces entrées à ces sorties étant identiques pour tous les niveaux.

Les quatre entrées $BR_{1.1}$ à $BR_{1.4}$ de l'arbitreur 2 sont reliées aux quatre premières entrées d'un registre 3 à sept entrées. Les sept sorties du registre 3, correspondant respectivement à ses sept entrées, sont reliées à sept entrées d'adressage d'une mémoire morte 4. La mémoire morte 4 comporte sept sorties dont les quatre premières sont reliées à des entrées correspondantes d'un second registre 5. Les trois autres sorties de la mémoire 4 sont reliées respectivement aux trois autres entrées du registre 3. Les quatre sorties du registre 5, correspondant à ses quatre entrées, sont reliées à quatre entrées correspondantes d'un quadruple amplificateur logique (connu sous la dénomination «buffer») à trois états. Les quatre sorties de l'amplificateur logique 6, correspondant à ses quatre entrées, sont référencées $BG_{1.1}$ à $BG_{1.4}$ respectivement.

Les quatre entrées $BR_{1.1}$ à $BR_{1.4}$ sont également reliées aux quatre entrées d'un circuit OU référencé 7. La sortie du circuit 7 est reliée à une borne EN1 qui est elle-même reliée à la première entrée d'un registre 8 à sept entrées. Les trois entrées suivantes du registre 8 sont reliées à des bornes EN2 à EN4 qui sont elles-mêmes reliées chacune, à la sortie d'un circuit OU (non représenté), lui-même relié de la même façon que le circuit 7 aux entrées BR relatives aux niveaux 2 à 4 respectivement.

Une autre entrée du registre 8 est reliée à une borne d'entrée référencée BBA. Les sept sorties du registre 8 sont reliées à sept entrées d'adressage d'une mémoire morte 9 à sept sorties. Les quatre premières sorties de la mémoire 9 sont reliées à des bornes VG1 à VG4 respectivement. La borne VG1 est reliée à l'entrée G de commande de validation commune aux quatre amplificateurs logiques composant le quadruple amplificateur 6. Les bornes VG2 à VG4 sont reliées, de la même façon que la borne VG1, aux bornes G des amplificateurs (non représentés), tels que l'amplificateur 6, pour les niveaux 2 à 4. Une autre sortie de la mémoire 9 est reliée à une borne de sortie référencée BCA. Les deux dernières sorties de la mémoire 9 sont reliées aux deux dernières entrées du registre 8.

Les entrées RZ de remise à zéro des registres 3, 4 et 8 sont reliées ensemble à une borne commune 10, elle-même reliée à un circuit (non représenté) produisant une impulsion de remise à zéro à la mise sous tension du système multiprocesseur. Les entrées CK de signaux d'horloge des registres 3 et 8 sont reliées ensemble et à une borne 11, et l'entrée CK de signaux d'horloge du registre 5 est reliée à une borne 12. Les bornes 11 et 12 sont reliées à un générateur de signaux d'horloge approprié fournissant des signaux de façon expliquée ci-dessous.

On va maintenant expliquer le fonctionnement du dispositif décrit ci-dessus, en rappelant d'abord brièvement le fonctionnement d'un arbitreur connu.

Lorsqu'une des unités de traitement du système multiprocesseur doit émettre ou recevoir des données par l'intermédiaire du bus de données, par exemple pour communiquer avec une autre unité de traitement, elle émet un signal appelé «bus request», par exemple un niveau logique «1», sur une sortie appropriée, en vue de faire connaître son intention d'utiliser le bus. Si plusieurs unités de traitement du système multiprocesseur réclament simultanément l'utilisation du bus, il faut les départager en leur attribuant un ordre de priorité. Si l'on attribuait la priorité toujours à la même unité de traitement, et si cette unité de traitement avait un très grand nombre de données à envoyer ou à recevoir par l'intermédiaire du bus de données, les autres unités de traitement ne pourraient pas utiliser le bus en temps opportun, par exemple pour dialoguer avec l'unité de traitement en train d'émettre ou de recevoir, ce qui ralentirait considérablement la vitesse de traitement du système multiprocesseur. Pour remédier à cet inconvénient, il a été proposé, dans l'article précité de «Computer Design», un arbitreur centralisé attribuant cycliquement, selon un ordre fixe, la priorité à chacune des unités de traitement du système. Si, à un instant donné, l'une des unités de traitement occupe le bus et si à cet instant une ou plusieurs autres unités de traitement réclament l'utilisation du bus en émettant un signal «bus request», l'arbitreur retire la priorité à l'unité de traitement en train d'émettre ou de recevoir dès la fin de l'opération élémentaire qu'elle exécute, et attribue, dans l'ordre fixe précité, la priorité aux unités de traitement ayant émis le «bus request», pour l'exécution à chaque fois d'une seule opération élémentaire. Lorsque toutes ces autres unités de traitement ont exécuté leur opérations élémentaires, la priorité revient à la première unité de traitement citée qui exécute l'opération élémentaire suivant celle après laquelle la priorité lui a été retirée par suite de l'émission de signaux «bus request». Ensuite a lieu un second cycle d'opérations élémentaires dans le même ordre fixe précité. Si entre temps de nouvelles autres unités de traitement émettent un signal «bus request», la priorité leur est accordée dès qu'arrive leur tour dans le cycle d'opérations élémentaires en cours. Bien entendu, le programme de fonctionnement du système multiprocesseur est prévu pour que le traitement qu'il doit faire puisse être effectivement réalisé dès que chacune des unités de traitement ayant émis un «bus request» a effectué le minimum possible d'opérations élémentaires. Ainsi, le système multiprocesseur réalise son traitement dans le temps minimal.

Le système multiprocesseur connu décrit ci-dessus fonctionne de façon très satisfaisante, mais l'encombrement et le prix du dispositif de mémoire de l'arbitreur deviennent prohibitifs lorsque ce système comporte un grand nombre d'unités de traitement. Ainsi, si le système multiprocesseur comporte par exemple seize unités de traitement, on doit disposer d'une mémoire de 2M mots ($2^{21}$ mots) de 21 éléments binaires chacun. Par contre, toujours dans le cas de seize unités de traitement, le dispositif arbitreur décrit ci-dessus en référence aux fig. 1 et 2 du dessin, et comportant quatre niveaux de quatre unités de traitement chacun ne nécessite qu'une mémoire de 128 mots de 7 éléments binaires pour chacun des quatre niveaux, et une mémoire de 128 mots de 7 éléments binaires pour l'arbitration des niveaux, soit au total cinq mémoires de 128 mots de 7 éléments binaires, ce qui, même avec les treize registres et les quatre portes OU nécessaires en plus des mémoires, est nettement moins encombrant et cher que la solution connue.

Le fonctionnement de l'élément arbitreur à l'intérieur de chaque niveau (arbitreur comportant les éléments tels que ceux référencés 3, 4 et 5) est connu en soi d'après l'article de «Computer Design» mentionné ci-dessus, et ne sera donc pas décrit plus en détail. Par contre, on va décrire en détail, en référence à la fig. 2, le fonctionnement de l'élément d'arbitreur commun à tous les niveaux, et comportant les éléments 7, 8, 9 et 6.

Dès qu'un «bus request» apparaît sur l'une des bornes BR, par exemple dans le niveau 1, et qu'une impulsion d'horloge arrive sur la borne 11, la mémoire 4 est adressée à une adresse déterminée par la configuration des signaux sur les bornes $BR_{1.1}$ à $BR_{1.4}$, et sur les trois dernières sorties de la mémoire 4 qui représentent l'état futur. En outre, ledit «bus request» produit un «1» à la sortie de OU 7, donc à l'entrée EN1 du registre 8. Si aucune autre unité de traitement n'occupe le bus, un «0» est présent sur la borne BBA.

La programmation de la mémoire 9 se fait de façon analogue à celle de la mémoire 4, à la seule différence que dans la mémoire 4 on prévoit entre chaque état «demande» (ou «request») un état «attente» (comme dans le cas de l'article précité de «Computer Design»), ce qui nécessite pour cette mémoire 4 trois entrées (pour l'état présent) et trois sorties (pour l'état futur), alors que dans le cas de la mémoire 9, à quatre demandes de niveau, apparaissant sur les quatre premières entrées de la mémoire 9, on fait correspondre quatre états que l'on code en binaire, ce qui ne nécessite que deux éléments binaires, et en plus on tient compte de l'état du bus de la façon suivante.

Lorsqu'au moins un «1» apparaît sur l'une des quatre premières entrées de la mémoire 9, si le bus est occupé, c'est-à-dire si un «1» apparaît sur la borne BBA et est transmis à la mémoire 9, la mémoire 9 doit produire un «1» sur la borne BCA pour permettre à l'unité de traitement occupant le bus de terminer son opération élémentaire. Si le bus n'est pas occupé, c'est-à-dire si un «0» est présent sur la borne BBA et est transmis à la mémoire 9, un «1» doit apparaître sur la sortie VG correspondant au niveau dont l'état est le plus proche, dans l'ordre fixe déterminé, de celui du niveau auquel appartenait le dernier utilisateur du bus. Tant qu'un «1» est présent sur la borne BBA, la mémoire 9 doit rester dans l'état correspondant à l'attribution du bus à l'unité de traitement qui en est actuellement maître quel que soit le nombre de «bus request» en attente. La mémoire 9 doit alors produire un «1» sur la borne BCA pour signaler à l'unité de traitement occupant le bus qu'elle doit le libérer le plus tôt possible, c'est-à-dire dès l'achèvement de l'opération élémentaire en cours. Lorsque cette opération est achevée l'unité de traitement en question envoie un «0» sur la borne BBA. Quand le signal sur la borne BBA repasse à «0», s'il n'y a aucun «bus request» en attente, la mémoire 9 doit rester dans l'état où elle était précédemment. S'il y a un seul «bus request» en attente, la mémoire 9 doit passer dans l'état associé au niveau correspondant et produire un «1» sur la sortie VG correspondante. Enfin, toujours dans le cas où un «0» apparaît sur la borne BBA, s'il y a plusieurs «bus request» en attente, la mémoire 9 doit passer dans l'état correspondant à la demande de niveau le plus proche du dernier maître du bus et produire un «1» sur la sortie VG correspondante. A partir de ces données, l'homme de l'art peut programmer très facilement la mémoire 9.

Comme précisé ci-dessus, à l'apparition d'un «bus request» sur l'une des bornes $BR_{1.1}$ à $BR_{1.4}$, et dès qu'un signal d'horloge est appliqué à la borne 11, les mémoires 4 et 9 sont adressées en fonction de ce «bus request» et de l'état précédent. Dès qu'un «0» apparaît sur la borne BBA, la sortie VG1 présente un «1» qui valide le dispositif 6. Aussitôt après, un signal d'horloge est renvoyé sur la borne 12, et la configuration, comportant un seul «1» correspondant audit «bus request», des quatre premières sorties de la mémoire 4 est transférée à l'entrée du dispositif 6. Or, comme le dispositif 6 a été validé par la sortie VG1, la configuration se présente sur les bornes $BG_{1.1}$ à $BG_{1.4}$, et le «1» de cette configuration accorde la priorité à l'unité de traitement venant de la demander.

Si plusieurs «bus request» apparaissent dans un niveau, par exemple le niveau 1, et aucun dans les autres niveaux, la première priorité est accordée à l'unité de traitement qui suit, dans l'ordre fixe prédéterminé, celle ayant eu en dernier la priorité. Ainsi, par exemple, si dans le niveau 1, l'ordre fixe des priorités est $UC_{1.1}$, $UC_{1.2}$, $UC_{1.3}$ et $UC_{1.4}$, si avant l'instant considéré où apparaissent simultanément des «bus request» pour les unités de traitement $UC_{1.1}$, $UC_{1.3}$ et $UC_4$, l'unité de traitement $UC_{1.3}$ a eu la priorité en dernier, l'arbitreur va accorder la priorité respectivement à $UC_{1.4}$, $UC_{1.1}$ et $UC_{1.3}$ à chaque fois pour effectuer une opération élémentaire. Si après ce cycle secondaire les «bus request» subsistent, l'arbitreur procède à un ou plusieurs autres cycles secondaires, et le cas échéant modifie ces cycles en fonction de la disparition de certains des «bus request» et/ou de l'apparition de nouveaux autres. Tant que des «bus request» subsistent dans le niveau considéré, un «1» apparaît sur la sortie VG correspondant à ce niveau à chaque impulsion d'horloge appliquée sur la borne 11. En outre, chaque transition d'une priorité à la suivante est précédée de l'apparition d'un «1» sur la borne BCA et suivie de l'apparition d'un «1» sur la borne BBA.

Dans le cas le plus général, c'est-à-dire lorsque plusieurs «bus request» sont produits par des unités de traitement appartenant à des niveaux différents, la priorité est attribuée selon un cycle principal par la mémoire 9, à raison d'une seule priorité par niveau, et selon un cycle secondaire pour chacun des niveaux par la mémoire 4 correspondante. Ainsi, par exemple dans le cas d'un système à seize unités de traitement, si toutes ces unités émettent un «bus request», et en supposant que la mémoire 9 attribue la première priorité au niveau 3, et que dans chaque niveau la première priorité est attribuée à la seconde unité de traitement, l'ordre des priorités étant partout l'ordre numérique croissant, les priorités seront accordées dans l'ordre suivant: $UC_{3.2}$, $UC_{4.2}$, $UC_{1.2}$, $UC_{2.2}$, $UC_{3.3}$, $UC_{4.3}$, $UC_{1.1}$ ... $UC_{3.1}$, $UC_{4.1}$, $UC_{1.1}$ et $UC_{2.1}$. Bien entendu, si des «bus request» subsistent après ce cycle complet de seize attributions de priorités, un autre cycle complet a lieu, et si certains des «bus request» disparaissent, le cycle complet est raccourci en conséquence sans autre modification de son ordre. Ainsi, si par exemple les «bus request» émis par les unités de traitement $UC_{4.3}$ et $UC_{1.3}$ disparaissent, la portion correspondante du cycle complet devient: ... $UC_{1.2}$, $UC_{2.2}$, $UC_{3.3}$, $UC_{2.3}$ $UC_{3.4}$, $UC_{4.4}$ ... On voit que la priorité passe directement de $UC_{3.3}$ à $UC_{2.3}$, les parties du cycle complet précédant l'attribution de la priorité à $UC_{3.3}$ et suivant l'attribution de la priorité à $UC_{2.3}$ n'étant pas perturbées. On remarquera que le passage de la priorité de $UC_{3.3}$ à $UC_{2.3}$ est aussi rapide que tous les autres passages, la vitesse de passage n'étant fonction que de la fréquence des signaux d'horloge appliqués à l'arbitreur.

Dans le cadre de l'invention, il est également possible de modifier à tout moment l'ordre des priorités, par exemple en remplaçant l'une ou plusieurs des mémoires mortes de l'arbitreur par d'autres mémoires progrmamées différemment. Ces autres mémoires peuvent être commutées par tout dispositif approprié commandé manuellement ou par le système multiprocesseur lui-même. Il est également possible d'utiliser des mémoires vives au lieu de mémoires mortes, le contenu de ces mémoires vives étant modifié par des moyens appropriés connus.

Toujours dans le cadre de l'invention, on peut utiliser pour réaliser les registres tels que le registre 5 des registres à entrée de validation, ce qui permet de supprimer les dispositifs tels que 6, les sorties VG étant alors reliées aux entrées de validation respectives de ces registres. D'autre part, un ou plusieurs niveaux groupes, ou peuvent être subdivisés en sous-groupes, ou sous-niveaux, un arbitreur élémentaire coopérant avec les unités de traitement de chaque sous-niveau, des arbitreurs de sous-niveaux, réalisés de la même façon que l'arbitreur de niveaux, attribuant la priorité aux différents arbitreurs élémentaires, et l'arbitreur de niveaux attribuant la priorité aux différents arbitreurs de sous-niveaux.

Enfin, il est bien entendu que l'invention n'est pas limitée à l'application à un système multiprocesseur, mais peut s'appliquer à tout système dans lequel il faut arbitrer entre plusieurs sous-ensembles utilisant une voie de communication commune.

## Revendications

1. Procédé d'arbitration de plusieurs sous-ensembles faisant partie d'un système comprenant une voie de communication commune et un dispositif d'arbitration centralisée, chaque sous-ensemble pouvant réclamer la priorité pour l'accès à cette voie afin d'effectuer une opération élémentaire, les lignes de demandes de priorité de ces sous-ensembles étant réparties en plusieurs groupes, et leurs lignes d'attribution de priorité étant réparties de façon correspondante, caractérisé par le fait que l'on réserve à chacun de ces groupes une seule ou plusieurs priorités dans une suite cyclique principale d'attribution de priorité, que l'on réserve à chacun des sous-ensembles, à l'intérieur de chaque groupe, une seule ou plusieurs priorités dans une suite cyclique secondaire, que le dispositif d'arbitration centralisée reçoit de chaque sous-ensemble un signal de demande d'utilisation de la voie commune, et que ce dispositif d'arbitration détermine à quel groupe, parmi ceux dans lesquels s'est produite une demande, revient la priorité selon la suite principale, et détermine à quel sous-ensemble relatif à ce groupe revient la priorité selon la suite secondaire, et envoie un signal d'attribution à ce sous-ensemble.

2. Procédé selon la revendication 1, caractérisé par le fait que les groupes comportent des nombres différents de sous-ensembles.

3. Procédé selon l'une quelconque des revendications précédentes, caractérisé par le fait que l'on répartit, dans chaque groupe, ou dans certains d'entre eux, les sous-ensembles en plusieurs sous-groupes, que l'on réserve à chacun des groupes une seule ou plusieurs priorités dans une suite cyclique principale, que l'on réserve une seule ou plusieurs priorités à chacun des sous-groupes dans des suites cycliques secondaires, et que l'on réserve une seule ou plusieurs priorités à chacun des sous-ensembles à l'intérieur de chaque sous-groupe dans des suites cycliques tertiaires.

4. Procédé selon l'une quelconque des revendications précédentes, caractérisé par le fait que l'on modifie en cours de traitement l'ordre des priorités de la suite cyclique principale et/ou des suites cycliques secondaires et/ou des suites cycliques tertiaires.

5. Dispositif d'arbitration centralisée distribuant la priorité à un système comprenant plusieurs sous-ensembles pouvant réclamer la priorité pour l'accès à une voie de communication commune, chacun de ces sous-ensembles comportant une sortie de demande d'accès (BR) et une entrée d'autorisation d'accès (BG), ce dispositif comportant plusieurs arbitreurs élémentaires individuels, chacun d'eux étant relié à un groupe de sorties de demande d'accès et d'entrées d'autorisation d'accès, un dispositif de validation (6) étant interposé, pour chacun des groupes, entre les sorties d'un arbitreur élémentaire (3, 4, 5) et les entrées correspondantes d'autorisation d'accès des sous-ensembles, et un arbitreur élémentaire de groupe dont chaque sortie est reliée à un dispositif de validation des sorties d'un arbitreur élémentaire individuel correspondant, caractérisé par le fait que l'arbitreur élémentaire de groupe comprend un registre (8) et une mémoire d'attribution de priorité aux groupes et que le dispositif comprend plusieurs circuits OU (7) à plusieurs entrées chacun, ces entrées étant reliées respectivement, pour chacun des circuits OU aux sorties de demande d'accès (BR) des sous-ensembles d'un des groupes, la sortie de chaque circuit OU étant reliée, par l'intermédiaire du registre (8) à des premières entrées de la mémoire (9) d'attribution de priorité aux groupes dont une autre entrée est reliée, par l'intermédiaire du même registre, à toutes les sorties «voie de communication commune occupée» (BBA), reliées ensemble, des sous-ensembles, et dont m autres entrées sont reliées, par l'intermédiaire du même registre (9) à m autres sorties de cette mémoire, m étant égal à la partie entière, augmentée d'une unité, du logarithme à base 2 du nombre de groupes, et une autre sortie de ladite mémoire étant reliée simultanément à toutes les entrées «voie de communication commune libre» (BCA) des sous-ensembles.

6. Dispositif selon la revendication 5, caractérisé par le fait que la mémoire d'attribution de priorités aux groupes est une mémoire morte.

7. Dispositif selon l'une quelconque des revendications 5 et 6, caractérisé par le fait que l'une ou plusieurs des mémoires du dispositif arbitreur sont des mémoires vives reliées à un dispositif permettant d'en modifier le contenu.

8. Dispositif selon l'une quelconque des revendications 5 et 6, caractérisé par le fait qu'il comprend dans chaque groupe et/ou pour l'ensemble des groupes plusieurs mémoires mortes différentes reliées à chaque fois à un dispositif sélecteur permettant de sélectionner l'une d'entre elles.

9. Dispositif selon l'une quelconque des revendications 5 à 8, caractérisé par le fait que l'un ou plusieurs des groupes sont subdivisés en sous-groupes.

**Patentansprüche**

1. Arbitrationsverfahren für mehrere Untereinheiten, die Bestandteile eines Systems sind, welches einen gemeinsamen Kommunikationsweg und eine zentralisierte Arbitrationsvorrichtung umfasst, wobei jede Untereinheit den Vorrang zum Zugreifen auf diesen Weg verlangen kann, um eine elementare Operation durchzuführen, wobei die Vorrang-Anforderungsleitungen dieser Untereinheiten in mehrere Gruppen unterteilt sind und ihre Vorrang-Zuteilungsleitungen in entsprechender Weise unterteilt sind, dadurch gekennzeichnet, dass für jede dieser Gruppen nur eine einzige oder mehrere Prioritäten in einer zyklischen Prioritäts-Hauptzuteilungsfolge reserviert werden, dass für jede der Untereinheiten innerhalb jeder Gruppe eine einzige oder mehrere Prioritäten in einer zyklischen Nebenfolge reserviert werden, dass die zentralisierte Arbitrationsvorrichtung aus jeder Untereinheit ein Anforderungssignal zur Benutzung des gemeinsamen Weges empfängt und dass diese Arbitrationsvorrichtung bestimmt, welcher von denjenigen Gruppen, in denen eine Anforderung aufgetreten ist, gemäss der Hauptfolge die Priorität zukommt, und bestimmt, welcher zu dieser Gruppe gehörenden Untereinheit die Priorität gemäss der Nebenfolge zukommt, und dieser Untereinheit ein Zuteilungssignal zusendet.

2. Verfahren nach Anspruch 1, dadurch gekennzeichnet, dass die Gruppen verschiedene Anzahlen von Untereinheiten enthalten.

3. Verfahren nach einem der vorstehenden Ansprüche, dadurch gekennzeichnet, dass in jeder Gruppe oder in bestimmten Gruppen die Untereinheiten in mehrere Untergruppen unterteilt werden, dass für jede dieser Gruppen eine einzige oder mehrere Prioritäten in einer zyklischen Hauptfolge reserviert werden, dass für jede der Untergruppen in zyklischen Nebenfolgen eine einzige oder mehrere Prioritäten reserviert werden und dass für jede der Untereinheiten innerhalb jeder Untergruppe eine oder mehrere Prioritäten in drittrangigen zyklischen Folgen reserviert werden.

4. Verfahren nach einem der vorstehenden Ansprüche, dadurch gekennzeichnet, dass im Verlaufe der Verarbeitung die Reihenfolge der Prioritäten der zyklischen Hauptfolge und/oder der zyklischen Nebenfolgen und/oder der drittrangigen zyklischen Folgen verändert wird.

5. Zentralisierte Arbitrationsvorrichtung, welche die Priorität in einem System verteilt, welches mehrere Untereinheiten enthält, die Vorrang für den Zugriff auf einen gemeinsamen Kommunikationsweg verlangen können, wobei jede dieser Untereinheiten einen Zugriffsanforderungs-Ausgang (BR) und einen Zugriffsautorisations-Eingang (BG) umfasst, wobei diese Vorrichtung mehrere einzelne elementare Arbitrationseinheiten enthält, von denen jede an eine Gruppe von Zugriffsanforderungs-Ausgängen und Zugriffsautorisations-Eingängen angeschlossen ist, wobei für jede der Gruppen eine Freigabevorrichtung (6) zwischen die Ausgänge einer elementaren Arbitrationseinheit (3, 4, 5) und die entsprechenden Zugriffsautorisations-Eingänge der Untereinheiten eingefügt ist, sowie eine elementare Gruppen-Arbitrationseinheit umfasst, an der jeder Ausgang mit einer Freigabevorrichtung zur Freigabe der Ausgänge einer entsprechenden individuellen elementaren Arbitrationseinheit verbunden ist, dadurch gekennzeichnet, dass die elementare Gruppen-Arbitrationseinheit ein Register (8) und einen Gruppen-Prioritätszuteilungsspeicher umfasst und dass die Vorrichtung mehrere OR-Schaltungen (7) mit jeweils mehreren Eingängen umfasst, die jeweils an jeder OR-Schaltung mit den Zugriffsanforderungs-Ausgängen (BR) der Untereinheiten einer der Gruppen verbunden sind, wobei der Ausgang jeder OR-Schaltung über das Register (8) mit den ersten Eingängen des Gruppen-Prioritätszuteilungsspeichers (9) verbunden ist, wovon ein weiterer Eingang über dieses selbe Register mit allen miteinander verbundenen Ausgängen «gemeinsamer Kommunikationsweg belegt» (BBA) der Untereinheiten verbunden ist, während seine m weiteren Eingänge über dasselbe Register (9) mit m weiteren Ausgängen dieses Speichers verbunden sind, worin m gleich dem ganzzahligen und um eins vergrösserten Teil des Zweierlogarithmus der Anzahl von Gruppen ist, wobei ein weiterer Ausgang des genannten Speichers gleichzeitig mit allen Eingängen «gemeinsamer Kommunikationsweg frei» (BCA) der Untereinheiten verbunden ist.

6. Vorrichtung nach Anspruch 5, dadurch gekennzeichnet, dass der Gruppen-Prioritätszuteilungsspeicher ein Festwertspeicher ist.

7. Vorrichtung nach Anspruch 5 oder 6, dadurch gekennzeichnet, dass einer oder mehrere Speicher der Arbitrationsvorrichtung Arbeitsspeicher sind, die mit einer Vorrichtung verbunden sind, welche die Veränderung ihres Inhalts ermöglicht.

8. Vorrichtung nach Anspruch 5 oder 6, dadurch gekennzeichnet, dass sie in jeder Gruppe und/oder für die Gesamtheit der Gruppen mehrere verschiedene Festwertspeicher enthält, die jeweils mit einer Selektionsvorrichtung verbunden sind, welche das Auswählen eines derselben gestattet.

9. Vorrichtung nach einem der Ansprüche 5 bis 8, dadurch gekennzeichnet, dass eine oder mehrere Gruppen in Untergruppen unterteilt sind.

**Claims**

1. Method of arbitration among a plurality of subunits forming part of a system comprising a common communication path and a centralized arbitration device, each subunit being allowed to request priority of access to this path in order to perform an elementary operation, the priority request lines of these subunits being divided into a plurality of groups, and their priority allocation lines being divided in similar fashion, characterized by the fact that a single or a plurality of priorities are retained for each of these groups in accordance with a main cyclic priority allocation sequence, that inside each group a single or a plurality of priorities are retained for each of the subunits in accordance with a secondary cyclic sequence, that the centralized arbitration device receives from each subunit a request signal requesting the use of the common path, and in that this arbitration device determines that group among those where a request has occurred to which the priority is to be allocated in accordance with the main sequence, and determines that of the subunit related to this group to which priority is to be allocated in accordance with the secondary sequence, and sends an allocation signal to this subunit.

2. Method according to claim 1, characterized by the fact that the groups comprise different numbers of subunits.

3. Method according to any of the preceding claims, characterized by the fact that within each group or within certain groups the subunits are divided into a plurality of subgroups, that a single or a plurality of priorities are retained for each of the groups in accordance with a cyclic main sequence, that a single or a plurality of priorities are retained for each of the subgroups in accordance with secondary cyclic sequences, and in that a single or a plurality of priorities are retained for each of the subunits inside each subgroup in accordance with tertiary cyclic sequences.

4. Method according to any of the preceding claims, characterized by the fact that the order of the priorities of the main cyclic sequence and/or the secondary cyclic sequences and/or the tertiary cyclic sequences is modified in the course of the processing.

5. Centralized arbitration device distributing the priority in a system comprising a plurality of subunits allowed to request the priority of access to a common communication path, each of these subunits comprising an access request output (BR) and an access authorization input (BG), this device comprising a plurality of individual elementary arbitration units each of which is connected to a group of access request outputs and access authorization inputs, an enabling device (6) being interconnected for each of the groups between the outputs of an elementary arbitration unit (3, 4, 5) and the corresponding access authorization inputs of the subunits, and an elementary group arbitration unit each output of which is connected to an enabling device for enabling the outputs of a corresponding individual elementary arbitration unit, characterized by the fact that the elementary group arbitration unit comprises a register (8) and a group priority allocation memory, and that the device comprises a plurality of OR circuits (7) each of which has a plurality of inputs respectively connected to the access request outputs (BR) of the subunits of one of the groups, the output of each OR circuit being connected through the register (8) to first inputs of the group priority allocation memory (9) a further input of which is connected through the same register to all of the interconnected «common communication path occupied» outputs (BBA) of the subunits, and m further inputs of which are connected through the same register (9) to m further outputs of this memory, m being equal to the integer portion plus one unit of the logarithm of the number of groups to the base 2, and a further output of said memory being simultaneously connected to all of the «common communication path free» inputs (BCA) of the subunits.

6. Device according to claim 5, characterized by the fact that the group priority allocation memory is a read only memory.

7. Device according to any of claims 5 and 6, characterized by the fact that one or a plurality of memories of the arbitration device are random access memories connected to a device for modifying the content thereof.

8. Device according to any of claims 5 and 6, characterized by the fact that it comprises, within each group and/or for all of the groups, a plurality of different read only memories each connected to a selector device permitting the selection of one of them.

9. Device according to any of claims 5 to 8, characterized by the fact that one or a plurality of groups are subdivided into subgroups.

Fig.1

Fig.2

0 039 635